# FASCICULE DE BREVET EUROPEEN

(11) **EP 0 573 382 B1**
(45) Date de publication et mention de la délivrance du brevet: **01.10.1997**
(21) Numéro de dépôt: 93500075.2
(22) Date de dépôt: 04.06.1993
(51) Int. Cl.: H02G 7/00, H02G 1/02

(54) **Balise pour câbles de lignes électriques ou similaires et un dispositif pour sa mise en place**
Markierung für Freileitungskabel oder dergleichen und Einsetzvorrichtung dafür
Marker for overhead lines cable or the same and associated placing device

(30) Priorité: 05.06.1992 ES 9201171
(43) Date de publication de la demande: 08.12.1993
(73) Titulaire: SOCIEDAD ANONIMA DE PREFORMADOS METALICOS, Izurdiaga-Irurzun, Navarra (ES)
(72) Inventeur: Martirena Larumbe, Fernando, Irurzun (Navarra) (ES)
(74) Mandataire: Urizar Anasagasti, Jesus Maria

(56) Documents cités:
- EP-A- 0 031 855
- DE-U- 7 519 442
- FR-A- 820 619
- FR-A- 2 577 078
- US-A- 3 362 377

## Description

La présente invention, tel que son nom l'indique, concerne une balise pour câbles de lignes électriques, destinée en principe à chasser les oiseaux et à les avertir de l'existence de câbles; cependant, elle peut aussi servir de référence comme balise aérienne pour les avions ou hélicoptères survolant la zone. La présente invention concerne aussi un dispositif employé pour la mise en place de balises de ce genre.

En général, les câbles des lignes de réseaux électriques ou téléphoniques, quand les lignes sont d'une certaine puissance, présentent un diamètre suffisant pour pouvoir être vus les jours clairs par les oiseaux qui volent dans la zone; cependant, cette visibilité se perd facilement les jours nuageux. De plus, il existe normalement un câble de neutre qui est tendu par mesure de sécurité au-dessus des trois câbles qui constituent les phases électriques, lequel normalement a une section inférieure à celle des câbles, ce qui fait que d'un côté il est plus difficile à voir et d'un autre côté, aux dénivellations du terrain, il est souvent assez séparé des câbles de phase car ils pèsent un peu plus, adoptant alors une configuration plus courbée et proche du sol, et il est donc facile que, se trouvant dans la ligne de vision des câbles de phase, ils ne s'aperçoivent pas de l'existence de ce quatrième câble au-dessus des autres, et parfois assez écarté. Il va sans dire que si ce problème se rapporte aux hélicoptères pouvant survoler la zone, ou même des avions, les conséquences qu'entraînerait le manque de visibilité et le choc contre le câble qui s'ensuivrait, seraient très graves.

Actuellement, il existe très peu de balises de signalisation de ce genre installées; c'est seulement dans les zones d'approche des aéroports que l'on trouve des balises placées sur les conducteurs aériens. Les balises aériennes installées sont généralement composées d'une baguette qui présente une zone centrale enroulée en cercle et qui est tendue perpendiculairement au centre suivant deux brins enroulés en spirale qui s'enrouleront autour du câble, pour que ce cercle se trouve en position orthogonale par rapport au câble et soit par conséquent plus facilement visible; il existe aussi un autre genre de balises formées d'une espèce de boule immobilisée sur le câble par un moyen quelconque; en tout cas, la balise présente extérieurement une couleur, ou est même réfléchissante, afin de pouvoir être vue de loin.

Le problème que présente ce genre de balises est qu'elles exigent la manipulation d'un technicien pour leur mise en place. Si cette mise en place est effectuée sans couper l'alimentation d'énergie électrique, le risque d'éventuelles décharges pour l'électricien, est énorme et en peut bien sûr être assumé; couper l'alimentation d'énergie électrique sur certaines lignes est une opération extrêmement coûteuse et de plus peut être seulement réalisée certains jours de la semaine ou de l'année, après avoir averti les usagers ou après avoir adopté les mesures de dérivation appropriées. Pour mettre en place ce genre de balises, on monte un chariot sur la ligne et sur celui-ci un électricien, le câble en question devant supporter tant le poids du chariot que celui de la personne, ce qui suppose dans le meilleur des cas 150 kgs. environ. De plus, il faut tenir compte du fait que comme ce câble est au-dessus des autres, il est soumis aux décharges électriques qui surviennent continuellement sur la ligne, et à cause de cela il peut être endommagé à un endroit de son parcours et peut par conséquent ne pas supporter le poids déjà mentionné; on place normalement aussi sur la partie supérieure un câble de fibre optique qui de toute évidence en résiste pas aux tensions d'un câble métallique conventionnel, ces tensions pouvant affecter le bon fonctionnement de la fibre. En définitive, l'électricien non seulement court d'énormes risques au moment d'installer ce genre de balises, mais encore leur mise en place peut provoquer la rupture ou l'inutilisation du câble qui doit les supporter.

Grâce à la présente invention, les inconvénients déjà mentionnés sont résous, car il a été prévu une balise qui peut être mise en place sans que la manipulation d'un électricien soit nécessaire, en plaçant un ensemble de balises sur un chariot, qui est directement monté sur le câble et qui présente des moyens d'actionnement autonomes et un contrôle à distance, par l'intermédiaire duquel il se déplace à volonté tout le long de la ligne et on met en place aux points souhaités la balise ou balises nécessaires. Grâce à ce système de travail, on évite non seulement les risques humains lors de l'opération de mise en place, mais encore ce chariot présente de toute évidence un poids bien inférieur à celui del'autre chariot et de l'électricien lui-même, et par conséquent le câble n'est pas soumis à de fortes tensions pouvant causer sa déformation, rupture ou inutilisation.

Le brevet français 1321537 décrit un dispositif pour la signalisation ou marquage de câbles électriques, consistant en une pièce porte-étiquettes qui, dans une de ses variantes de réalisation, est introduite autour du câbles à travers une ouverture qui communique avec un orifice central. Le but de cette invention consiste à marquer les câbles d'une installation électrique domestique ou industrielle, bien sûr à basse tension, pour que l'électricien sache les distinguer; elle n'a peu ou point rien à voir avec la balise chasse-oiseaux ici décrite, sauf une manière semblable d'être fixée au câble, mais cela n'empêche pas de restreindre la nouveauté de celle-ci, étant donnée la différence d'application et le fait évident qu'une multitude d'éléments sont fixés d'une manière similaire à une "pince".

Une balise ayant ces caractéristiques comprend un corps central qui a une forme générale parallélépipédique et qui est doté d'ailettes latérales, qui généralement sont disposées verticalemente et qui adoptent une couleur, disposition et configuration suivant le terrain et la faune de la zone. Ce corps présente un orifice central, dont le diamètre est légèrement inférieur à celui du câble, pour qu'il soit fermement accroché à celui-ci ainsi qu'un accès à travers une ouverture communiquant avec la face inférieure et présentant une largeur progressive vers l'extérieur afin de pouvoir facilement l'emboucher sur le câble de sorte qu'en poussant ce corps central vers le bas on puisse arriver à l'introduire dans l'orifice central.

Les ailettes de cette balise sont d'une matière suffisamment souple pour se plier au vent, de sorte que, bien qu'elles soient parfaitement visibles et ayant à plus forte raison certaine mobilité, elles ne provoquent aucune augmentation des tensions de la ligne, lesquelles pourraient occasionner des déformations ou des ruptures du câble.

Comme nous l'avons déjà indiqué, le mise en place de cette ligne est effectuée automatiquement grâce à un dispositif spécialement prévu à cet effet, qui est constitué d'un chariot qui monte sur la ligne et présente des moyens de traction capables de se déplacer le long du câble et un contrôle à distance par l'intermédiaire duquel est actionné à un moment donné un dispositif de fixation des balises, placées dans un chargeur aménagé sur le chariot lui-même.

Ces caractéristiques et d'autres de la présente invention seront plus facilement comprises à l'aide de la description suivante effectuée sur la base d'un exemple pratique de réalisation; cette description est faite à l'aide des plans ci-joints, sur lesquels:

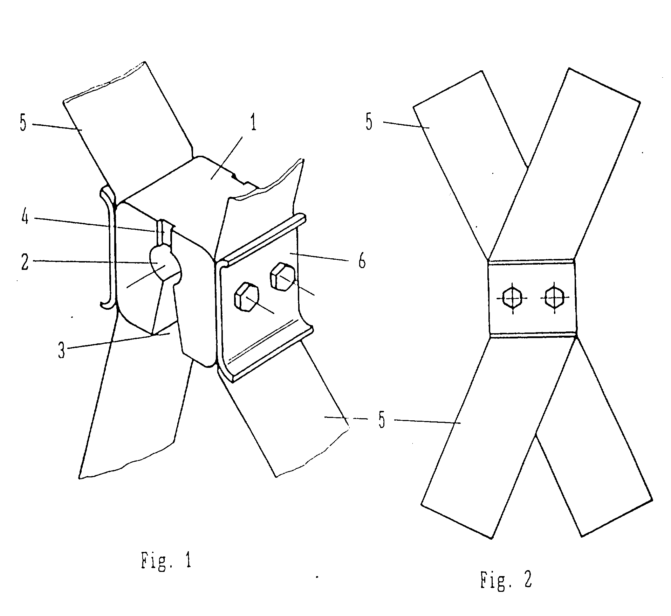

La figure 1 montre une vue générale en perspective d'une balise réalisée conformément à l'invention.
La figure 2 correspond à une vue en projection latérale d'une de ces balises.
Les figures 3 et 4 représentent un dispositif d'installation de balises, placé sur une ligne et une section verticale agrandie d'un mécanisme de fixation de balises placé sur celui-ci.

La balise préconisée ici comprend un corps central (1) qui doit être fixé sur un câble (16), qui présente généralement une configuration sous forme de bloc parallélépipédique, pourvu d'un trou central (2) auquel on a accès à partir d'une embouchure (3) disposée de préférence vers la face inférieure. Cette embouchure (3) est plus ample vers l'extérieur, de sorte qu'elle peut être directement située sur le câble (16), étant nécessaire de faire pression sur le bloc (1) vers le bas pour que celui-ci dépasse les bords de l'embouchure de l'orifice (2) jusqu'à ce que le corps (1) soit parfaitement accroché sur le câble et en position fixe.

De ce corps central (1) partent des ailettes (5) qui généralement adoptent une disposition verticale, de préférence dans des directions obliques et contraires, pour être ainsi plus facilement visibles latéralement, comme le montre la figure 2. Malgré ce qui est indiqué, leur configuration, ornementation et disposition ne doivent pas être considérées comme étant limitatives, pouvant par conséquent adopter n'importe laquelle en fonction de la couleur et des caractéristiques du terrain pour être plus facilement visibles; cela dépendra aussi de la faune de la zone que l'on prétend spécialement sauver, car de toute évidence si ce que l'on prétend est sauver par exemple certains oiseaux qui ont peur des autours ou des aigles, la disposition appropriée serait d'une façon semblable à celle d'un de ces rapaces pour ainsi, non seulement les avertir de la présence des câbles, mais encore les chasser de la zone au-dessus de laquelle passe la ligne électrique. En tout cas, les ailettes (5) sont faites d'une matière synthétique qui prend une grande flexibilité et sont généralement fixées au corps central (1) au moyen de plaques latérales (6), qui garantissent l'adoption de leur disposition verticale, mais leur permettent cependant, avec un vent latéral, de se plier suffisamment afin de ne pas provoquer des tensions latérales sur la ligne qui pourraient affecter la structure du câble et qui les font ressembler à un oiseau en plein vol. En général, leur disposition est divergente, et leur projection a la forme d'un "X" ou n'importe quelle autre forme étant suffisamment visible dans une direction quelconque.

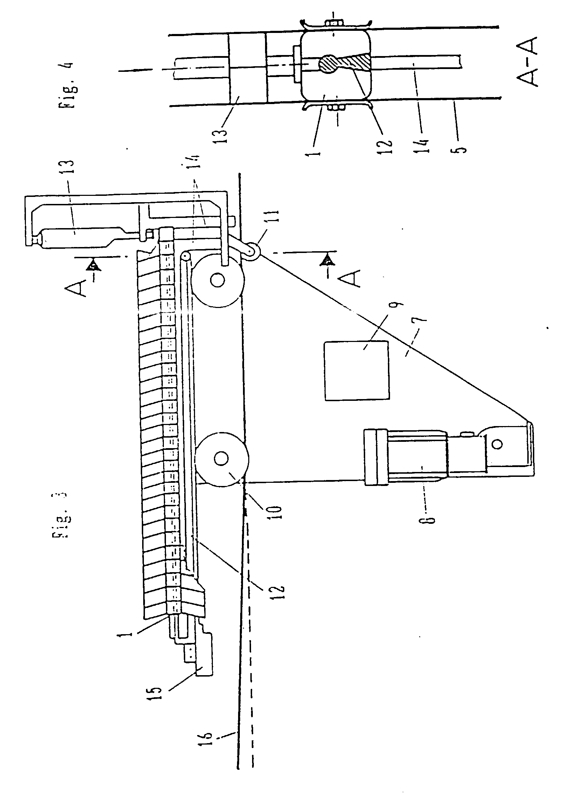

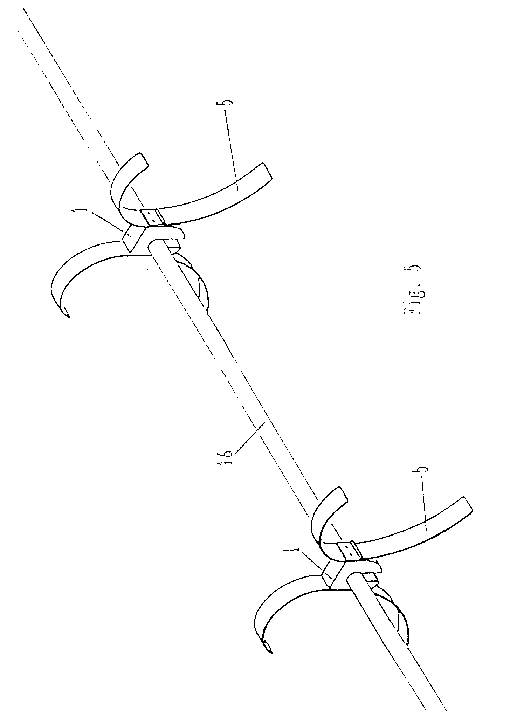

Le bloc (1) présente sur les côtés perpendiculaires aux ailettes (5) des guides (4) qui vont rendre plus aisée leur mise en place au moyen d'un dispositif automatique, comme le représentent les figures 3 et 4, lequel est décrit ci-après.

Sur la figure 3 on observe un dispositif de mise enplace de balises qui est composé d'un chariot (7) qui est pourvu d'un moteur électrique (8) actionné à partir d'une batterie (9), les deux étant fixés sur le chariot lui-même (7). Ce chariot présente à la partie supérieure des roues (10) qui se déplacent sur le câble (16), ainsi qu'une roue (11) qui est placée sous le câble afin d'éviter qu'un coup de vent soudain ou tout autre mouvement brusque du chariot pendant les opérations de mise en place fasse décrocher et tomber le câble. Le moteur (8) actionne au moins une des roues de traction (10), de sorte que le chariot se déplace le long de la ligne, dans le cas qui est représenté, de droite à gauche, en plaçant les balises (1) aux endroits appropriés.

Au-dessus de la structure du chariot, se trouve un chargeur longitudinal (12), placé au-dessus du câble (16) et légèrement parallèle par rapport à celui-ci. Ce chargeur présente un élément de tension (15) qui pousse l'ensemble des balises (1) vers un élément de fixation, placé à la partie postérieure par rapport à la direction d'avance du chariot. En général, ce chargeur est formé d'un guide (12) qui présente une section semblable à celle de l'espace vide (2) et (3) des balises, et est pourvu d'un poussoir qui les dirige vers la face postérieure, de sortie, où se situe l'élément de fixation des balises. Cet élément d'implantation de balises est formé d'un cylindre (13) qui agit dans le sens vertical et qui, comme on peut l'observer sur la figure 4, pousse une balise déterminée (1) en embouchant son ouverture (3) sur le câble (16) et en faisant pression du haut vers le bas jusqu'à arriver à l'introduire sur ce câble, l'orifice (2) se trouvant alors autour de lui. Pour effectuer cette opération de mise en place par guidage, la balise (1) dispose comme nous l'avons déjà dit, de guides latéraux (4), semblables à d'autres (14) placés sur la structure de l'élément chargeur, de sorte que chaque balise se déplace du chargeur jusqu'au câble verticalement guidée et s'embouche ainsi directement à celui-ci, l'empêchant ainsi de tomber dans le vide sans pouvoir le replacer à cause d'un déplacement latéral dans n'importe quelle direction.

Dans ce chariot, il n'a été représenté aucun dispositif ayant des fonctions d'embrayage, lequel, placé à la partie postérieure, désaccouple la roue de traction (10) pour pouvoir envoyer, si le contrôle à distance ou l'actionnement du chariot est en panne, un second chariot auxiliaire, pourvu d'un crochet qui, s'accrochant à cet embrayage, débloquerait la roue de traction et entraînerait le chariot en panne jusqu'à la tourelle la plus proche pour une fois là-bas le descendre ou réaliser la réparation appropriée.

Une fois la nature de la présente invention suffisamment bien décrite, ainsi qu'une façon de la mettre en pratique, il ne nous reste plus qu'à ajouter que dans son ensemble ainsi que les parties qui la composent, il est possible d'introduire des changements de forme, matériaux et de disposition, à condition que ces altérations ne fassent pas varier substantiellement les caractéristiques de l'invention dont les revendications figurent ci-après:

## Revendications

1. Balise pour câbles de lignes électriques ou semblables, destinée à chasser les oiseaux et/ou avertir ces derniers et/ou des avions de l'existence de câbles, qui comprend un corps (1) qui présente une cavité intérieure (2) accessible depuis une ouverture (3) qui communique avec l'une de ses faces, afin de pouvoir faire passer à travers de celle-ci le câble (16) correspondant jusqu'à ce qu'il soit retenu dans cette cavité intérieure (2) comme s'il s'agissait d'une pince, et à cet effet ce corps (1) est fait d'une matière synthétique de certaine flexibilité, caractérisée en ce que ledit corps (1) présente latéralement des ailettes (5) disposées de préférence en position verticale, qui présentent une couleur, une disposition et une configuration plus en accord avec le terrain et la faune de la zone.

2. Balise, selon la revendication 1, caractérisée parce que ce corps central (1) présente une configuration générale sous forme de bloc parallélépipédique, à section continue, sur lequel sont placées des ailettes (5) fixées sur ses faces latérales pour qu'elles adoptent après leur mise en place une position verticale des deux côtés du câble.

3. Balise, selon n'importe laquelle des revendications précédentes, caractérisée parce que ces ailettes (5) adoptent en général une disposition divergente, ayant la forme d'un "X" en projection latérale, et qu'elles présentent extérieurement une zone photoluminescente afin d'être suffisamment visible de n'importe quelle direction.

4. Balise, selon n'importe laquelle des revendications précédentes, caractérisée parce que ces ailettes (5) sont d'une matière synthétique flexible qui, bien qu'elles maintiennent leur forme, avec un vent latéral se plient suffisamment afin de ne pas trop augmenter les tensions sur la ligne, et simulent en même temps un oiseau en plein vol.

5. Balise, selon n'importe laquelle des revendications 1 ou 2, caractérisée parce que ce corps central (1) présente latéralement sur les faces opposées aux ailettes des guides (5) qui permettent le déplacement guidé de celle-ci pendant les opérations de mise en place au moyen d'un dispositif approprié.

6. Balise, selon n'importe laquelle des revendications précédentes et en particulier selon la 4ème, caractérisée parce qu'à l'extérieur accompagnant ces ailettes, elle dispose d'éléments de renfort (6) qui évitent la déformation de celles-ci au-delà d'une limite et en particulier à l'endroit d'union au corps ou bloc central.

7. Balise selon les revendications précédentes, caractérisée en ce que, pour sa mise en place, est prévu un chariot (7) pourvu d'un moteur électrique (8) et d'une batterie d'alimentation (9), actionné à partir d'un contrôle à distance, qui dispose de roues de traction (10) qui pendent du câble de ligne (16), sur lequel elles se déplacent; ce chariot (7) dispose de même d'un chargeur de balises (12) et d'un dispositif de fixation de celles-ci, également actionnés par contrôle à distance.

8. Balise, selon la revendication précédente caractérisée parce que le chargeur (12) consiste en un guide dont la section est en accord avec la capacité des balises, placé parallèlement et au-dessus des roues d'entraînement (10) afin que la pièce à placer, celle qui se trouve le plus en arrière par rapport au sens d'avance du chariot, se trouve au-dessus du câble de la ligne (16), avec l'ouverture dirigée vers celui-ci, le fixateur de balises agissant alors comme un élément poussoir qui agit du haut vers le bas pour que les ailettes (5) de la pièce restent en position verticale.

9. Balise, selon les revendications 7 et 8, caractérisée parce que le point final du chargeur (12), où est située la première pièce à placer et en face du fixateur de balises (13), qui agit orthogonalement par rapport à la précédente, dispose de guides (14), semblables à les guides (4) de la pièce (1), qui permettent son déplacement contrôlé jusqu'au câble, pour être finalement situés dans la position appropriée.

10. Balise, selon n'importe laquelle des revendications 7 à 9, caractérisée parce qu'à la partie avant de ce chariot (7), il dispose d'un embrayage qui débloque la roue d'entraînement (10) du chariot par rapport au moteur, accessible à partir d'un crochet placé sur un autre chariot, qui permet l'entraînement du précédent en cas de panne.

## Patentansprüche

1. Boje für Kabel von elektrischen oder ähnlichen Leitungen, die dazu bestimmt ist, Vögel zu vertreiben und/oder sie und/oder Flugzeuge vor dem Vorhandensein von Kabeln zu warnen, und die aus einem Körper (1) besteht, der einen inneren Hohlraum (2) aufweist, der von einer Öffnung (3) aus zugänglich ist, die mit einer ihrer Seiten kommuniziert, damit das entsprechende Kabel (16) durch dieselbe geführt werden kann, bis es in dem genannten inneren Hohlraum festgehalten wird, als handle es sich um eine Klammer, weswegen der genannte Körper (1) aus einem synthetischen Material mit einer gewissen Flexibilität besteht, dadurch gekennzeichnet, daß der genannte Körper an den Seiten jeweils einen Flügel (5) aufweist, die vorzugsweise in vertikaler Position ausgerichtet sind, und die die dem Gelände und der Fauna des Gebietes angemessenste Farbe, Anordnung und Gestaltung haben.

2. Boje, gemäß Anspruch 1, dadurch gekennzeichnet, daß der genannte zentrale Körper eine allgemeine Gestaltung in Form eines parallelepipedischen Blockes aufweist, von durchgehendem Querschnitt, wobei sie an ihren Seiten Flügel (5) aufweist, damit diese nach ihrer Anbringung eine vertikale Position auf beiden Seiten des Kabels einnehmen.

3. Boje, gemäß jedem beliebigen der vorherigen Ansprüche, dadurch gekennzeichnet, daß die genannten Flügel (5) allgemein eine auseinanderstrebende Anordnung annehmen, wobei die Seitenansicht die Form eines "X" annimmt, und die auf der Außenseite eine fotoluminiszierende Zone aufweisen, die ausreichend und von allen Seiten aus sichtbar ist.

4. Boje, gemäß jedes beliebigen der vorherigen Ansprüche, dadurch gekennzeichnet, daß die genannten Flügel (5) aus einem flexiblen synthetischen Material sind, so daß sie sich, obwohl sie ihre Form beibehalten, bei Seitenwind ausreichen biegen, um die Spannung auf die Leitung nicht übermäßig zu erhöhen und gleichzeitig einen fliegenden Vogel zu simulieren.

5. Boje, gemäß jedem beliebigen der Ansprüche 1 oder 2, dadurch gekennzeichnet, daß der genannte Zentralkörper (1) seitlich an den den Flügeln gegenüberliegenden Seiten Führungen (4) aufweist, die die geführte Fortbewegung derselben während der Vorgänge des Anbringens mittels einer geeigneten Vorrichtung erlauben.

6. Boje, gemäß jedes beliebigen der vorherigen Ansprüche und im Besonderen des 4. Anspruchs, dadurch gekennzeichnet, daß die Außenseiten, die die genannten Flügel festhalten, jeweils über ein Verstärkungselement (6) verfügen, das die Deformierung derselben über eine Grenze hinaus und besonders in der Zone der Verbindung mit dem Körper oder Zentralblock verhindern.

7. Boje, gemäß der vorherigen Ansprüche, dadurch gekennzeichnet, daß für ihre Anbringung ein Schlitten (7) vorgesehen ist, mit einem Elektromotor (8) und einer Batterie zur Versorgung ausgerüstet, von einer Fernsteuerung aus betätigt, der über Zugräder (10) verfügt, die am Leitungskabel (16) hängen, auf dem sie sich fortbewegen; der genannte Schlitten (7) verfügt ebenso über ein Bojenmagazin (12) und eine Befestigungsvorrichtung für dieselben, die ebenfalls ferngesteuert betätigt werden.

8. Boje, gemäß dem vorherigen Anspruch, dadurch gekennzeichnet, daß das genannte Magazin (12) aus einer Querführung gemäß dem Hohlraum der Boje besteht, parallel und über den Antriebsrädern (10) angebracht, zu dem Zweck, daß die von der Bewegungsrichtung des Schlittens aus gesehen hinterste über dem Leitungskabel (16) positioniert wird, wobei die Öffnung demselben zugewandt ist, woraufhin die Befestigungsvorrichtung für die Bojen als ein schiebendes Element wirkt, das von oben nach unten wirkt, damit die Flügel (5) des Teils in einer vertikalen Position verbleiben.

9. Boje, gemäß den Ansprüchen 7 und 8, dadurch gekennzeichnet, daß der Endpunkt des Magazins (12), wo sich das erste anzubringende Teil befindet und gegenüber der Befestigungsvorrichtung für die Bojen (13), die hinsichtlich des vorgenannten achteckig wirkt, über Führungen (14) verfügt, die den Führungen (4) des Teils (1) gleich sind, die seine kontrollierte Fortbewegung bis zum Kabel erlauben, damit sie sich zum Schluß in der angemessenen Position befinden.

10. Boje, gemäß jedem beliebigen der Ansprüche 7 bis 9, dadurch gekennzeichnet, daß der genannte Schlitten (7) am vorderen Teil über eine Kupplung verfügt, die das Antriebsrad (10) hinsichtlich des Motors entsperrt, zugänglich von einem Haken aus, der sich an einem anderen Schlitten befindet, der das Abschleppen der vorherigen im Falle eines Defektes erlaubt.

## Claims

1. Beacon for electricity lines or similar, destined to repel birds and/or warn about the existence of cables to them and/or aircraft, consisting of a body (1) having an internal cavity (2) accessible from an opening (3) which communicates with one of its faces permitting the corresponding cable (16) to pass through it until it remains retained in said internal cavity (2) as if it were a clamp, such that said body (1) is made in a synthetic material of a certain degree of flexibility, characterized in that said body (1) laterally has two fins (5) preferably arranged in a vertical position and with the color arrangement and shape more suitable for the land and fauna of the area.

2. Beacon according to claim 1, characterized in that said central body has a general shape in the form, of a parallelepiped block of continuous section, the fins (5) being arranged by their side faces such that after their placement they adopt a vertical position on both sides of the cable.

3. Beacon, according to any preceding claims, characterized in that said fins (5) generally adopt a diverging arrangement forming in a side elevation an "X" shape and externally having a photoluminescent zone which is sufficient and visible from any direction.

4. Beacon, according to any preceding claims, characterized in that said fins (5) are made of a flexible synthetic material which although it maintains its shape, it becomes sufficiently flexible with a side wind without excessively tensing the line, in turn, simulating a bird in flight.

5. Beacon, according to any preceding claims 1 or 2, characterized in that said central body (1) presents some guides (4) in a sideways arrangement on the opposite faces of the fins allowing the guided displacement thereof during the placement operations by means of a suitable device.

6. Beacon, according to any of the above claims and specifically according to the 4th one, characterized in that outside, on examining said fins, it has two reinforcing elements (6) which prevent the deformation thereof beyond a limit and specifically at their area of joining to the body or central block.

7. Beacon, according to the above claims, characterized in that for its placement, a carriage (7) is foreseen, with an electric motor (8) and a supply battery (9), activated remotely, having some tractor wheels (10) hanging from the line cable (16), over which they move; said carriage (7) likewise has a beacon loader (12) and a fixing device for the latter, likewise activated remotely.

8. Beacon, according to the previous claim, characterized in that said loader (12) consists of a guide with a section according to the beacon cavity, placed in parallel and above the dragging wheels (10) such that the part to be placed, the most behind with respect to the advance direction of the carriage, is located on the line cable (16), with an opening directed towards the same, then activating the beacon fastener like a pushing element which acts from above to below, such that the fins (6) of the part remain in a vertical position.

9. Beacon, according to claims 7 and 8, characterized in that the end point of the loader (12), where the first part to be placed is situated and in front of the beacon fastener (13), which acts octagonally with respect to the above, having some guides (14), identical to the guides (4) of the part (1), permitting their controlled displacement until the cable, to finally be located in the suitable position.

10. Beacon, according to any of the claims 7 to 9, characterized in that in the front part of said carriage (7) it has a clutch which unblocks the dragging wheel (10) of the carriage with respect to the motor, accessible from a hook placed on another carriage allowing the dragging of the previous one in case of failure.
